# EUROPEAN PATENT SPECIFICATION

(11) **EP 4 782 081 B1**
(45) Date of publication and mention of the grant of the patent: **02.12.2026**
(21) Application number: 25720499.0
(22) Date of filing: 03.04.2025
(51) Int. Cl.: B01D 21/24, G05D 9/02

(54) **OVERFLOW ELEMENT FOR EXCESS WATER IN WATER TREATMENT TANKS**
ÜBERLAUFAUSGANG FÜR ÜBERSCHÜSSIGES WASSER IN WASSERBEHANDLUNGSTANKS
SORTIE DE TROP-PLEIN POUR L'EXCÉDENT D'EAU DANS LES RÉSERVOIRS DE TRAITEMENT DE L'EAU

(30) Priority: 07.06.2024 PT 2024119519; 22.08.2024 EP 24195980
(43) Date of publication of application: 29.07.2026
(73) Proprietor: Ark - Indústria, Lda, 4430-059 Vila Nova de Gaia (PT)
(72) Inventor: PEREIRA COSTA, Nelson Aires, 4430-059 Vila Nova De Gaia (PT)
(74) Representative: do Nascimento Gomes, Rui
(86) International application number: PCT/IB2025/053533
(87) International publication number: WO 2025/253194

(56) References cited:
- CN-A- 114 014 408
- JP-A- H 062 772
- US-A1- 2003 127 376

## Description

### FIELD OF THE INVENTION

The present invention falls within the technical field of water treatment systems, defining a water overflow element suitable for water tanks in water treatment plants, taking wastewater treatment as an example. The overflow element for excess water of the present invention, the tank in which it can be included and the station in which said tank can be included have a miniaturised format application - sizes suitable for laboratory or experimental applications, or for training purposes - when compared to tanks and large stations, such as wastewater treatment plants connected to the sewage network and forming part of an installed water treatment infrastructure. A tank comprising the overflow element of the present invention is miniaturised, when compared to large-scale tanks that are part of wastewater treatment plants, and has a capacity of between 4 and 50 L.

### PRIOR ART

Solutions that attempt to simulate the operation of wastewater treatment plants are well known in the state of the art.

In the particular case of wastewater treatment plants for educational purposes, these solutions simulate the operation of plants, including elements which, for example, are intended to represent contaminants, but do not consist of contaminants, consisting of fictitious elements with which they only seek to show trainees who operate or follow the operation of said systems how a wastewater treatment plant could work.

These systems are not functional and do not make it possible for water to be effectively treated, at least no more than removing said fictitious elements from water or showing by other means how a wastewater treatment plant could work in reality.

Therefore, it is not required that their components actually work to treat wastewater.

Additionally, even existing miniaturised systems involving miniaturised tanks do not present overflow solutions appropriate to their size, failing to take advantage of miniaturisation to include functionalities practicable by a human user.

Patent application CN114014408A discloses a large scale sedimentation tank floating oil collecting device, comprising a hollow oil collecting tank, a movable collecting cylinder, and a height-adjusting mechanism. This system operates seeking automated oil extraction.

Patent application US2003127376 discloses a vortex chamber device for oil-water separation, using rotational flow to form an oil vortex. Oil is removed via a pipe, while water exits below. A flow regulator controls levels, and a tilted corrugated plate further separates residual oil.

Patent application JPH062772 discloses a telescopic valve for wastewater tanks, featuring a valve rod covered by an airtight rubber bellows to prevent corrosion from harmful gases, and having bellows which extend/contract with rod movement.

The overflow element of the present solution makes it possible to overcome these limitations in an innovative manner, particularly in respect of a miniaturised structure.

### SUMMARY OF THE INVENTION

The present invention includes an element for the overflow of excess water for a miniaturised water tank according to claim 1.

The rod may have a length such that, when the first tube and/or the second tube is retracted into the other tube to a maximum extent and when the overflow element is inside a tank, the rod is above an upper opening of the tank.

The said telescopic movement may be adjustable between a maximum level correspondent to a maximum height reachable by the upper part of the first tube a minimum level correspondent to a minimum height reachable by the upper part of the first tube and a plurality of intermediate levels arranged between the maximum and minimum heights reachable by the upper part of the first tube.

The maximum height reachable by the upper part of the first tube for entry of excess water may have a value within 100 and 2,500 mm.

The overflow element is suitable for the overflow of excess water in a tank having a capacity between 4 and 50 L.

The overflow element is intended for a miniaturised water tank intended, in turn, for a miniaturised water treatment plant.

The first tube can be telescopically movable inside the second tube.

The first tube can be telescopically movable on the outside of the second tube.

The overflow element can additionally comprise a cup, said cup i) having an open upper surface, ii) a projection formed inside it with at least one opening and iii) being coupled solidly and hermetically to the upper part of the first tube for the entry of excess water, in such a way that water flowing over a side wall of the cup and entering it through the open upper surface reaches the inside of the cup and the opening of the projection of the cup in connection with the upper part of the first tube, in such a way that water flowing over the side wall of the cup runs into the first tube through the at least one opening of the cup.

The side wall of the cup forming part of the open top surface can be indented, each indentation having a preestablished width between tops, in such a way that any particles present in excess water and therefore overflowing, with a size greater than the preestablished width, are filtered by said indentation. Each opening of the cup projection may have a circular shape. The side wall of the cup that forms part of the open top surface may be indented as a crown.

The overflow element additionally comprises a handle, which is solidly coupled to the upper part of the first tube, whereby a longitudinal moving action of the handle consequently causes the first tube to move in relation to the second tube.

The overflow element can comprise a first circular seal associated with a lower part of the first tube and a second circular seal associated with an upper part of the second tube, the first and second seals ensuring the tightness of the telescopic and movable connection of the first and second tubes.

The overflow element can additionally comprise a curved third tube with an upper part hermetically connected to a lower part of the second tube, so that the overflow can be vertically aligned with a tank and an outlet of the third tube can be connected to a side outlet of said tank.

The present invention also includes a system comprising a water tank, being a miniaturised water tank for a miniaturized water treatment plant, and an overflow element in accordance with the present invention, the tank having an upper opening and a lower opening, and an additional opening for excess water to overflow out, the overflow element being arranged inside the tank and vertically aligned with a central axis of the tank, a water outlet of the overflow element being connected to the additional opening of the tank, the tank having a capacity between 4 and 50 L.

The variation between maximum and minimum heights reachable by the upper part of the first tube of the overflow element may correspond to 10-70 % of the total height of the tank, optionally 10-50 %.

The overflow element can additionally comprise a curved third tube with an upper part hermetically connected to a lower part of the second tube, so that the overflow can be vertically aligned with a tank and an outlet of the third tube can be connected to a side outlet of said tank, and the additional opening can be formed laterally.

The present invention further includes the use of the overflow element in accordance with the present invention as an overflow element for excess water in a miniaturised water tank, the tank having a capacity of between 4 and 50 L, and comprising a longitudinal moving action of the handle which consequently causes the first tube to move in relation to the second tube, for adjusting the level of the overflow element.

### DESCRIPTION OF FIGURES

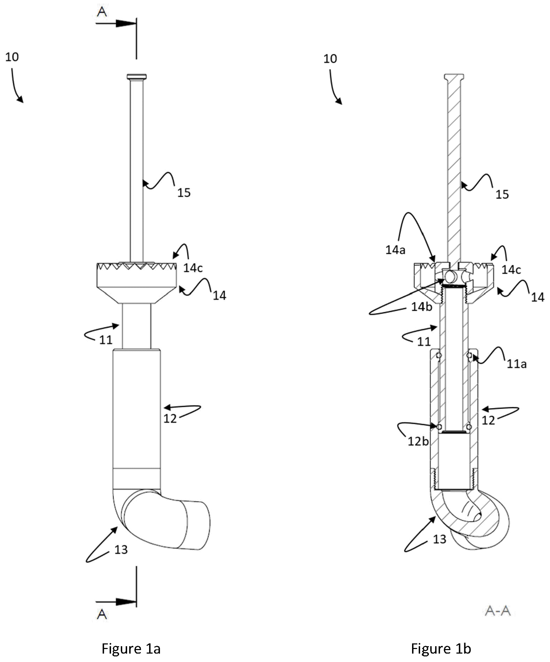

Figure 1a - representation of a side view of an overflow element (10) in accordance with the present invention. The overflow element (10) comprises a first tube (11) telescopically coupled to a second tube (12). The first tube (11) moves inside the second tube (12) and is partially arranged inside it. The first tube (11) is coupled to a puller (15) in the form of a rod, and they move jointly. Therefore, the movement of the rod causes the first tube (11) to move telescopically in relation to the second tube (12), consequently adjusting the overflow level inside a tank (20) in which the overflow element (10) is arranged. Between the first tube (11) and the puller (15) there is a cup (14), where overflowing water or liquid runs into the cup (14) and from there into the first tube (11). The cup (14) has an open top surface, whereby any liquid that reaches the inside of the cup (14) flowing over its side wall enters the inside of the cup (14) and from there runs into the first tube (11).
Figure 1b - representation of a sectional view along section A-A of the overflow element (10) in figure 1a. This sectional view makes it possible to identify the elements arranged inside the cup (14). Any liquid that reaches the inside of the cup (14) flowing over its lateral surface reaches the inside of the first tube (11) by entering openings (14b) formed in a centrally arranged projection (14a) of the cup (14). This projection (14a) and in particular the openings (14b) are arranged correspondingly in connection with the first tube (11).

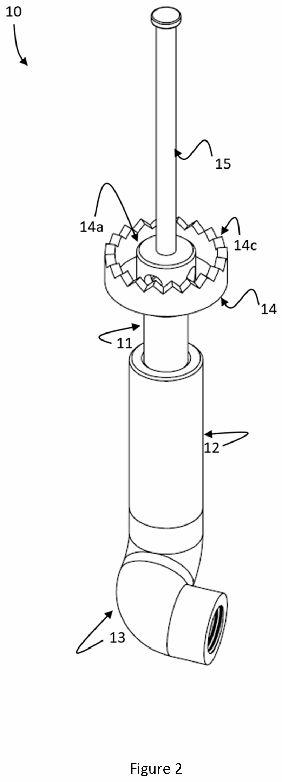

Figure 2 - representation of a perspective view of the overflow element in figure 1. This perspective view shows the third tube (13), which has two deflections. Therefore, the first and second tubes are aligned, with the third tube (13) showing two deflections at substantially 90°, which enable the overflow element to be coupled to a side wall of a tank (20).

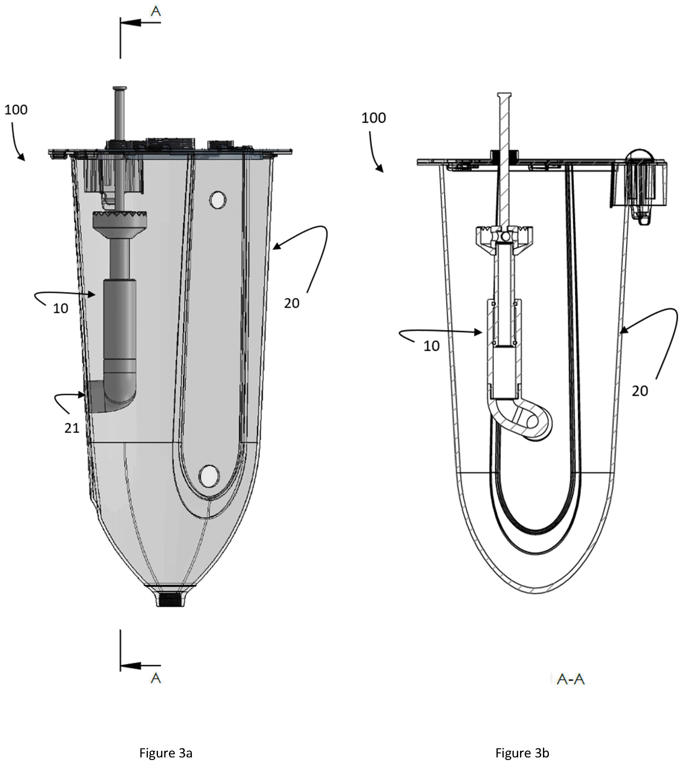

Figure 3a - representation of a system (100) in accordance with the present invention, wherein an overflow element (10) in accordance with figures 1a, 1b and 2 is arranged inside a tank (20), the puller (15) in the form of a rod being movable and projecting through a lid of the tank (20) and a lower part of the third tube (13) being coupled to a side wall of the tank (20) in which a side opening (21) is formed. If an increase in liquid inside the tank (20) is such that it exceeds a level above the side wall of the cup (14) of the overflow element (10), starting from the indented parts of the crown (14c), this liquid above said level will run into the cup (14) and from there it will be conveyed to the outside of the tank (20) in a controlled manner. Telescopic adjustment of the height of the cup (14) by adjusting the relative position between the first and second tubes makes it possible to adjust this level of overflow.
Figure 3b - representation of a sectional view along section A-A of the overflow element (10) in figure 3a.

### DETAILED DESCRIPTION

The overflow element (10) of the present invention is described below using non-limiting embodiments.

The overflow element (10) defines a telescopic system that provides a fine adjustment for the collection of sludge and suspended matter in view of the results of experiments and research carried out on processes such as oxidation, chemical precipitation and coagulation-flocculation miniaturised water treatment plants, comprising miniaturised water tanks (20) where the aim is to prevent uncontrolled overflow that might cause undesirable contamination.

The overflow element (10) can be placed inside a miniaturised water tank (20) having a capacity of between 4 and 50 L, the water tank (20) being in turn for a miniaturised water treatment plant. A lower part thereof, for example a lower part of the second or third tube (13), is connected to a wall of the tank (20) for the exit of overflowing liquid. As the tank (20) fills with water or another liquid, the liquid/water level rises until it reaches an upper part of the overflow element, for example the side wall of the cup (14). From there it will be conveyed, running into the first tube (11), then into the second tube (12) and/or to the third tube (13). From there, it runs into the tank outlet (20) to which the overflow element (10) is coupled, causing overflowing water/liquid to leave the tank (20) in a controlled manner.

Therefore, the overflow element (10) is coupled below the tank (20), with a free upper section, so that the telescopic movement between the first tube (11) and the second tube (12) can be adjusted, as shown in the figures.

This equipment is intended for the abovementioned collections by inserting it into a tank (20). At the top it can have a conical-shaped indented filter with an upper ring, designated as cup (14). The concavity of this filter enables particles suspended on the surface to be collected in order to analyse their behaviour and the reason for their existence, depending on the experience and research being carried out.

The linear movement of the overflow element (10) is provided by a puller (15) which is a handle (15) comprising a manually operable rod, adjusting the height of the overflow level and/or for the abovementioned functions of collection of suspended particles. The handle (15) is solidly coupled to the upper part of the first tube (11), whereby a longitudinal moving action of the handle (15) consequently causes the first tube (11) to move in relation to the second tube (12), the handle (15) comprising a manually operable rod. Thus, the rod is manually operable by a user, namely the user pulling the rod from a tank or pushing the rod inside a tank. Such movement allows that the joint connection between the rod and the first tube (11), through the upper part of the first tube (11), may be actuated. Thus, in a simplified mechanical structure, the telescopic movement between first and second tubes (11, 12) is actuated.

The rod may have a length equal to or greater than the length of the second tube (12). The rod may have a length such that, when the first and/or second tube (12) is retracted into the other tube to a maximum extent and when the overflow element (10) is inside a tank (20), the rod is above an upper opening of the tank (20), to which a lid is attached. This lid can have an opening so that the rod can pass through it.

The overflow element (10) thus makes it possible to create intermediate levels of adjustable emergency drainage for the safety of users and equipment where it is inserted.

The overflow element (10) provides for:
- Selective removal of particles suspended on the liquid surface
- Adjustable maximum safety level
- Intermediate level adjustment

The overflow element (10) may include a third tube (13) with a curve. This third tube (13) thus makes it possible to realise a deflected connection by coupling two points forming part of lines that are perpendicular or substantially perpendicular to each other. Therefore, it is attached above to a lower part of the second tube (12) and below and laterally to a side opening (21) in the wall of the tank (20). Between the lower part of the second tube (12) and the side opening (21) of the wall, the third tube (13) makes at least one deflection, which may be of 90°. Therefore, the third tube (13) can comprise one or more deflections. In the example in the figures, the third tube (13) contains two deflections substantially at 90°.

The overflow element (10) can comprise a cup (14). Following the example of figures 1a and 2, the cup (14) has an open top surface. The base of the cup (14) contains a projection (14a) formed inside it. This projection (14a), in accordance with the figures, is cylindrical and centrally formed. The projection (14a) contains at least one opening (14b) and this opening (14b) is connected to the first tube (11) via the upper part of the first tube (11). In accordance with the figures, the projection (14a) has several openings (14b) formed laterally in its cylinder wall. Additionally, the base of the cup (14) where the projection (14a) is formed can be tapered. The projection (14a) forms a single piece with the cup (14) or it may consist of a separate piece, attachable to a central part of the cup (14), which contains a centrally formed opening.

The projection (14a) formed in the cup (14) is also such that its longitudinal extension accommodates a section of the upper part of the first tube (11), to be coupled between the cup (14) and the first tube (11), maintaining the connection for the overflowing liquid to run down. This longitudinal extension may include a perforated sealing ring, in such a way that these perforations correspond to the openings of the projection (14a) of the cup (14) and to the upper part of the first tube (11), thus providing for the passage of overflowing liquid between the cup (14) and the first tube (11) and, simultaneously, an improved seal.

The overflow element (10) can be arranged inside a tank (20). A lower part thereof, for example a lower part of the third tube (13), is connected to a side wall of the tank (20) for the exit of overflowing liquid. As the tank (20) fills with water or another liquid, the water level rises until it reaches the side wall of the cup (14). Once it flows over the side wall, the water runs into the cup (14). It then reaches the projection (14a) of the cup (14) and, consequently, the openings (14b) formed therein. From there it runs into the first tube (11), then into the second tube (12) and finally into the third tube (13). It subsequently runs into the side outlet of the tank (20) to which the overflow element (10) is coupled, causing overflowing water/liquid to exit the tank (20) in a controlled manner.

The side wall of the cup (14) that forms part of the open top surface may be indented as a crown (14c). This crown indentation (14c) has a saw-like configuration, where triangular projections are formed accompanying the side wall, as shown in the figures. The crown-shaped arrangement (14c), with the configuration of a crown (14c), defines narrowings which allow the passage of water overflowing from a tank (20) and particles smaller than a given narrowing. However, particles larger than a given narrowing will be retained in the crown (14c). This enables the overflow element (10) not only to operate as a safeguard for situations where excess water overflows, but also to collect suspended particles smaller than a given narrowing.

As will be clear to one skilled in the art, the present invention should not be limited to the embodiments described herein, and a number of changes are possible which remain within the scope of the present invention.

Obviously, the preferred embodiments shown above are combinable, in the different possible forms, the repetition all such combinations being herein avoided.

## Claims

1. An overflow element (10) for the overflow of excess water for a miniaturised water tank (20), the water tank (20) having a capacity of between 4 and 50 L, the water tank (20) being, in turn, for a miniaturised water treatment plant, said overflow element (10) comprising a first tube (11) and a second tube (12), wherein
the first tube (11) is formed above the second tube (12),
the first tube (11) has an upper part for the entry of excess water,
the second tube (12) has a lower part for the exit of water coming from the first tube (11),
the first tube (11) being telescopically and hermetically movable inside or outside the second tube (12), thus adjusting a height of the upper part of the first tube (11) for the entry of excess water, the height being defined by the length of the two tubes deduced by the length of the part of a tube that is inside the other tube, said telescopic movement being adjustable, and
the overflow element (10) further comprising a handle (15), in turn comprising a manually operable rod, which is solidly coupled to the upper part of the first tube (11), whereby a longitudinal moving action of the handle (15) caused by a user pulling the rod or pushing the rod consequently causes the first tube (11) to move in relation to the second tube (12), by means of a joint connection between the rod and the first tube (11), through the upper part of the first tube (11).

2. Overflow element (10) according to the previous claim, wherein the rod has a length such that, when the first tube (11) and/or the second tube (12) is retracted into the other tube to a maximum extent and when the overflow element (10) is inside a tank (20), the rod is above an upper opening of the tank (20).

3. Overflow element (10) according to any of the preceding claims, wherein the said telescopic movement is adjustable between a maximum level correspondent to a maximum height reachable by the upper part of the first tube (11), a minimum level correspondent to a minimum height reachable by the upper part of the first tube (11), and a plurality of intermediate levels arranged between the maximum and minimum heights reachable by the upper part of the first tube (11).

4. Overflow element (10) according to any of the preceding claims, wherein the maximum height reachable by the upper part of the first tube (11) for entry of excess water has a value within 100 and 2,500 mm.

5. Overflow element (10) according to any of the preceding claims, wherein the first tube (11) is
telescopically movable inside the second tube (12), or
telescopically movable on the outside of the second tube (12).

6. Overflow element (10) according to any of the preceding claims, wherein it additionally comprises a cup (14), said cup (14) i) having an open upper surface, ii) a projection (14a) formed inside it with at least one opening (14b) and iii) being coupled solidly and hermetically to the upper part of the first tube (11) for the entry of excess water, in such a way that water flowing over a side wall of the cup (14) and entering it through the open upper surface reaches the inside of the cup (14) and the opening (14b) of the projection (14a) of the cup (14) in connection with the upper part of the first tube (11), in such a way that water flowing over the side wall of the cup (14) runs into the first tube (11) through the at least one opening (14b) of the cup (14).

7. Overflow element (10) according to the previous claim, wherein the side wall of the cup (14) forming part of the open top surface is indented, each indentation having a preestablished width between tops, in such a way that any particles present in excess water and therefore overflowing, with a size greater than the preestablished width, are filtered by said indentation.

8. Overflow element (10) according to the previous claim, wherein the side wall of the cup (14) that forms part of the open top surface is indented as a crown (14c).

9. Overflow element (10) according to any of claims 6-8, wherein each opening (14b) of the projection (14a) of the cup (14) has a circular shape.

10. Overflow element (10) according to any of the preceding claims, wherein it comprises a first circular seal (12b) associated with a lower part of the first tube (11) and a second circular seal (11a) associated with an upper part of the second tube (12), the first and second seals (12b, 11a) ensuring the tightness of the telescopic and movable connection of the first and second tubes.

11. Overflow element (10) according to any of the preceding claims, wherein it further comprises a curved third tube (13) with an upper part hermetically connected to a lower part of the second tube (12), so that the overflow can be vertically aligned with a tank (20) and an outlet of the third tube (13) can be connected to a side outlet (21) of said tank (20).

12. System comprising a water tank (20), being a miniaturised tank for a miniaturised water treatment plant, and an overflow element (10) according to any of the preceding claims, the tank (20) having an upper opening and a lower opening, and an additional opening for excess water to overflow out, the overflow element (10) being arranged inside the tank (20) and vertically aligned with a central axis of the tank (20), a water outlet of the overflow element being connected to the additional opening of the tank (20), the tank (20) having a capacity between 4 and 50 L.

13. System according to the previous claim wherein the variation between maximum and minimum heights reachable by the upper part of the first tube (11) of the overflow element (10) corresponds to 10-70 % of the total height of the tank (20), optionally 10-50 %.

14. System according to the preceding claim, wherein the overflow element (10) is according to claim 10 and the additional opening is formed laterally.

15. Use of the overflow element (10) according to any of claims 1-11 as an overflow element (10) for excess water in a miniaturised water tank (20), the tank (20) having a capacity of between 4 and 50 L, and comprising a longitudinal moving action of the handle (15) caused by a user pulling the rod or pushing the rod which consequently causes the first tube (11) to move in relation to the second tube (12), for adjusting the level of the overflow element (10).

## Patentansprüche

1. Überlaufelement (10) zum Überlauf von überschüssigem Wasser für einen miniaturisierten Wassertank (20), wobei der Wassertank (20) ein Fassungsvermögen zwischen 4 und 50 L aufweist, wobei der Wassertank (20) wiederum für eine miniaturisierte Wasseraufbereitungsanlage bestimmt ist, wobei das Überlaufelement (10) ein erstes Rohr (11) und ein zweites Rohr (12) umfasst, wobei
das erste Rohr (11) oberhalb des zweiten Rohrs (12) angeordnet ist,
das erste Rohr (11) einen oberen Teil für den Einlass von überschüssigem Wasser aufweist,
das zweite Rohr (12) einen unteren Teil für den Austritt
des aus dem ersten Rohr (11) kommenden Wassers aufweist, das erste Rohr (11) teleskopartig und hermetisch in das zweite Rohr (12) hinein oder aus diesem heraus bewegbar ist, wodurch eine Höhe des oberen Teils des ersten Rohrs (11) für den Einlass von überschüssigem Wasser eingestellt wird, wobei die Höhe durch die Länge der beiden Rohre definiert ist, abzüglich der Länge des Teils eines Rohrs, der sich im anderen Rohr befindet, wobei die teleskopartige Bewegung einstellbar ist, und
wobei das Überlaufelement (10) ferner einen Griff (15) umfasst, der seinerseits eine manuell betätigbare Stange umfasst, die fest mit dem oberen Teil des ersten Rohrs (11) verbunden ist, wodurch eine Längsbewegung des Griffs (15), die dadurch verursacht wird, dass ein Benutzer an der Stange zieht oder diese drückt, folglich bewirkt, dass sich das erste Rohr (11) relativ zum zweiten Rohr (12) bewegt wird, und zwar mittels einer Gelenkverbindung zwischen der Stange und dem ersten Rohr (11) durch den oberen Teil des ersten Rohrs (11).

2. Überlaufelement (10) nach dem vorstehenden Anspruch, wobei die Stange eine solche Länge aufweist, dass, wenn das erste Rohr (11) und/oder das zweite Rohr (12) bis zum Maximum in das jeweils andere Rohr eingezogen ist und sich das Überlaufelement (10) innerhalb eines Tanks (20) befindet, die Stange über einer oberen Öffnung des Tanks (20) liegt.

3. Überlaufelement (10) nach einem der vorstehenden Ansprüche, wobei die genannte teleskopartige Bewegung zwischen einem Maximalniveau, das einer vom oberen Teil des ersten Rohrs (11) erreichbaren Maximalhöhe entspricht, einem Minimalniveau, das einer vom oberen Teil des ersten Rohrs (11) erreichbaren Minimalhöhe entspricht, und einer Vielzahl von Zwischenniveaus einstellbar ist, die zwischen der vom oberen Teil des ersten Rohrs (11) erreichbaren maximalen und minimalen Höhen angeordnet sind.

4. Überlaufelement (10) nach einem der vorstehenden Ansprüche, wobei die vom oberen Teil des ersten Rohrs (11) zum Eintritt von überschüssigem Wasser erreichbare maximale Höhe einen Wert zwischen 100 und 2.500 mm aufweist.

5. Überlaufelement (10) nach einem der vorstehenden Ansprüche, wobei das erste Rohr (11)
teleskopisch innerhalb des zweiten Rohrs (12) verschiebbar ist oder
teleskopisch an der Außenseite des zweiten Rohrs (12) verschiebbar ist.

6. Überlaufelement (10) nach einem der vorstehenden Ansprüche, wobei es zusätzlich eine Schale (14) umfasst, wobei die Schale (14) i) eine offene Oberseite aufweist, ii) einen darin ausgebildeten Vorsprung (14a) mit mindestens einer Öffnung (14b) besitzt und iii) fest und dicht mit dem oberen Teil des ersten Rohrs (11) verbunden ist, um überschüssiges Wasser aufzunehmen, derart, dass Wasser, das über eine Seitenwand der Schale (14) fließt und durch die offene Oberseite in diese eintritt, das Innere der Schale (14) und die Öffnung (14b) des Vorsprungs (14a) der Schale (14) in Verbindung mit dem oberen Teil des ersten Rohrs (11) gelangt, so dass Wasser, das über die Seitenwand der Schale (14) fließt, durch die mindestens eine Öffnung (14b) der Schale (14) in das erste Rohr (11) einläuft.

7. Überlaufelement (10) nach dem vorstehenden Anspruch, wobei die Seitenwand der Schale (14), die einen Teil der offenen Oberseite bildet, eingekerbt ist, wobei jede Einkerbung eine vorgegebene Breite zwischen den Scheitelpunkten aufweist, derart, dass alle im überschüssigen Wasser vorhandenen und daher überlaufenden Partikel, deren Größe größer ist als die vorgegebene Breite, durch die Einkerbung gefiltert werden.

8. Überlaufelement (10) nach dem vorstehenden Anspruch, wobei die Seitenwand der Schale (14), die einen Teil der offenen Oberseite bildet, als Krone (14c) eingekerbt ist.

9. Überlaufelement (10) nach einem der Ansprüche 6-8, wobei jede Öffnung (14b) des Vorsprungs (14a) der Schale (14) eine kreisförmige Gestalt aufweist.

10. Überlaufelement (10) nach einem der vorstehenden Ansprüche, wobei es eine erste kreisförmige Dichtung (12b), die einem unteren Teil des ersten Rohrs (11) zugeordnet ist, und eine zweite kreisförmige Dichtung (11a), die einem oberen Teil des zweiten Rohrs (12) zugeordnet ist, umfasst, wobei die erste und die zweite Dichtung (12b, 11a) die Dichtheit der teleskopischen und beweglichen Verbindung des ersten und des zweiten Rohrs gewährleisten.

11. Überlaufelement (10) nach einem der vorstehenden Ansprüche, wobei es ferner ein gekrümmtes drittes Rohr (13) umfasst, dessen oberer Teil hermetisch mit einem unteren Teil des zweiten Rohrs (12) verbunden ist, sodass der Überlauf vertikal auf einen Tank (20) ausgerichtet werden kann und ein Auslass des dritten Rohrs (13) mit einem seitlichen Auslass (21) des Tanks (20) verbunden werden kann.

12. System, umfassend einen Abwassertank (20), bei dem es sich um einen miniaturisierten Tank für eine miniaturisierte Wasseraufbereitungsanlage handelt, und ein Überlaufelement (10) gemäß einem der vorstehenden Ansprüche, wobei der Tank (20) eine obere Öffnung und eine untere Öffnung sowie eine zusätzliche Öffnung zum Überlaufen von überschüssigem Wasser aufweist, wobei das Überlaufelement (10) im Inneren des Tanks (20) angeordnet und vertikal auf die Mittelachse des Tanks (20) ausgerichtet ist, wobei ein Wasserauslass des Überlaufelements mit der zusätzlichen Öffnung des Tanks (20) verbunden ist und der Tank (20) ein Fassungsvermögen zwischen 4 und 50 L aufweist.

13. System nach dem vorstehenden Anspruch, wobei die Schwankung zwischen der maximalen und der minimalen Höhe, die der obere Teil des ersten Rohrs (11) des Überlaufelements (10) erreichen kann, 10-70 % der Gesamthöhe des Tanks (20) entspricht, gegebenenfalls 10-50 %.

14. System nach dem vorstehenden Anspruch, wobei das Überlaufelement (10) gemäß Anspruch 10 ausgebildet ist und die zusätzliche Öffnung seitlich angeordnet ist.

15. Verwendung des Überlaufelements (10) gemäß einem der Ansprüche 1-11 als ein Überlaufelement (10) für überschüssiges Wasser in einem miniaturisierten Wassertank (20), wobei der Tank (20) ein Fassungsvermögen zwischen 4 und 50 L aufweist, und eine Längsbewegung des Griffs (15) umfasst, die dadurch verursacht wird, dass ein Benutzer an der Stange zieht oder diese drückt, was folglich eine Bewegung des ersten Rohrs (11) relativ zum zweiten Rohr (12) bewirkt, um das Niveau des Überlaufelements (10) einzustellen.

## Revendications

1. Élément de débordement (10) pour l'évacuation de l'excédent d'eau d'un réservoir à eau (20) miniaturisé, le réservoir (20) ayant une capacité comprise entre 4 et 50 l, le réservoir (20) étant lui-même destiné à une installation miniaturisée de traitement de l'eau, ledit élément de débordement (10) comprenant un premier tube (11) et un deuxième tube (12), dans lequel
le premier tube (11) est disposé au-dessus du deuxième tube (12),
le premier tube (11) a une partie supérieure pour l'entrée de l'excédent d'eau,
le deuxième tube (12) a une partie inférieure pour la sortie de l'eau provenant du premier tube (11),
le premier tube (11) étant mobile de manière télescopique et étanche à l'intérieur ou à l'extérieur du deuxième tube (12), permettant ainsi de régler la hauteur de la partie supérieure du premier tube (11) pour l'entrée de l'excédent d'eau, ladite hauteur étant définie par la longueur des deux tubes, diminuée de la longueur de la partie d'un tube située à l'intérieur de l'autre tube, ledit mouvement télescopique étant réglable, et
l'élément de débordement (10) comprenant en outre une poignée (15) comportant elle-même une tige actionnable manuellement, solidement fixée à la partie supérieure du premier tube (11), de sorte qu'un déplacement longitudinal de la poignée (15), provoqué par un utilisateur tirant ou poussant la tige, entraîne par conséquent le déplacement du premier tube (11) par rapport au deuxième tube (12), au moyen d'une liaison entre la tige et le premier tube (11), à travers de la partie supérieure du premier tube (11).

2. Élément de débordement (10) selon la revendication précédente, dans lequel la tige présente une longueur telle que, lorsque le premier tube (11) et/ou le deuxième tube (12) est rétracté au maximum à l'intérieur de l'autre tube et que l'élément de débordement (10) se trouve à l'intérieur d'un réservoir (20), la tige dépasse au-dessus de l'ouverture supérieure dudit réservoir (20).

3. Élément de débordement (10) selon l'une quelconque des revendications précédentes, dans lequel ledit mouvement télescopique est réglable entre un niveau maximal correspondant à la hauteur maximale atteignable par la partie supérieure du premier tube (11), un niveau minimal correspondant à la hauteur minimale atteignable par la partie supérieure du premier tube (11), et une pluralité de niveaux intermédiaires situés entre lesdites hauteurs maximale et minimale atteignables par la partie supérieure du premier tube (11).

4. Élément de débordement (10) selon l'une quelconque des revendications précédentes, dans lequel la hauteur maximale atteignable par la partie supérieure du premier tube (11) pour l'entrée de l'excédent d'eau est comprise entre 100 et 2 500 mm.

5. Élément de débordement (10) selon l'une quelconque des revendications précédentes, dans lequel le premier tube (11) est
mobile de manière télescopique à l'intérieur du deuxième tube (12), ou
mobile de manière télescopique à l'extérieur du deuxième tube (12).

6. Élément de débordement (10) selon l'une quelconque des revendications précédentes, comprenant en outre une coupelle (14), ladite coupelle (14) i) présentant une face supérieure ouverte, ii) une saillie (14a) formée à l'intérieur de celle-ci avec au moins une ouverture (14b), et iii) étant fixée de manière solidaire et étanche à la partie supérieure du premier tube (11) pour l'entrée de l'excédent d'eau, de telle sorte que l'eau s'écoulant par-dessus une paroi latérale de la coupelle (14) et y pénétrant par la face supérieure ouverte atteint l'intérieur de la coupelle (14) et l'ouverture (14b) de la saillie (14a) de ladite coupelle (14) en communication avec la partie supérieure du premier tube (11), de sorte que l'eau s'écoulant par-dessus la paroi latérale de la coupelle (14) pénètre dans le premier tube (11) à travers de ladite au moins une ouverture (14b) de la coupelle (14).

7. Élément de débordement (10) selon la revendication précédente, dans lequel la paroi latérale de la coupelle (14) faisant partie de la face supérieure ouverte est échancrée, chaque échancrure ayant une largeur prédéterminée mesurée entre ses sommets, de sorte que toutes les particules présentes dans l'excédent d'eau et donc entraînées par le débordement, dont la taille est supérieure à ladite largeur prédéterminée, sont filtrées par lesdites échancrures.

8. Élément de débordement (10) selon la revendication précédente, dans lequel la paroi latérale de la coupelle (14) qui fait partie de la face supérieure ouverte présente des échancrures formant une couronne (14c).

9. Élément de débordement (10) selon l'une quelconque des revendications 6 à 8, dans lequel chaque ouverture (14b) de la saillie (14a) de la coupelle (14) présente une forme circulaire.

10. Élément de débordement (10) selon l'une quelconque des revendications précédentes, lequel comprend un premier joint d'étanchéité annulaire (12b) associé à une partie inférieure du premier tube (11) et un deuxième joint d'étanchéité annulaire (11a) associé à une partie supérieure du deuxième tube (12), les premier et deuxième joints d'étanchéité (12b, 11a) assurant l'étanchéité de la liaison télescopique et mobile entre le premier et le deuxième tube.

11. Élément de débordement (10) selon l'une quelconque des revendications précédentes, lequel comprend en outre un troisième tube courbe (13), dont une partie supérieure est raccordée de manière étanche à une partie inférieure du deuxième tube (12), de sorte que l'élément de débordement peut être aligné verticalement avec un réservoir (20) et que la sortie du troisième tube (13) peut être raccordée à une sortie latérale (21) dudit réservoir (20).

12. Système comprenant un réservoir d'eaux usées (20), ledit réservoir étant un réservoir miniaturisé pour une installation miniaturisée de traitement de l'eau, et un élément de débordement (10) selon l'une quelconque des revendications précédentes, le réservoir (20) ayant une ouverture supérieure et une ouverture inférieure, et une ouverture supplémentaire pour l'évacuation de l'excédent d'eau, l'élément de débordement (10) étant disposé à l'intérieur du réservoir (20) et aligné verticalement avec l'axe central dudit réservoir (20), une sortie d'eau de l'élément de débordement étant raccordée à l'ouverture supplémentaire du réservoir (20), ledit réservoir (20) ayant une capacité comprise entre 4 et 50 l.

13. Système selon la revendication précédente, dans lequel l'écart entre les hauteurs maximale et minimale atteignables par la partie supérieure du premier tube (11) de l'élément de débordement (10) correspond à 10 à 70 % de la hauteur totale du réservoir (20), éventuellement à 10 à 50 %.

14. Système selon la revendication précédente, dans lequel l'élément de débordement (10) est conforme à la revendication 10 et l'ouverture supplémentaire est ménagée latéralement.

15. Utilisation de l'élément de débordement (10) selon l'une quelconque des revendications 1 à 11 en tant qu'élément de débordement pour l'évacuation de l'excédent d'eau d'un réservoir miniaturisé (20), le réservoir (20) ayant une capacité comprise entre 4 et 50 l, et comprenant une action de déplacement longitudinal de la poignée (15) provoquée par un utilisateur tirant ou poussant la tige, laquelle entraîne par conséquent le déplacement du premier tube (11) par rapport au deuxième tube (12), afin de régler le niveau de l'élément de débordement (10).
